# EUROPEAN PATENT SPECIFICATION

(11) **EP 3 090 824 B1**
(45) Date of publication and mention of the grant of the patent: **17.11.2021**
(21) Application number: 16168054.1
(22) Date of filing: 03.05.2016
(51) Int. Cl.: B23D 61/02, B23D 61/04

(54) **CIRCULAR SAW BLADE AND METHOD OF WORKING WITH CIRCULAR SAW BLADE**
KREISSÄGEBLATT UND VERFAHREN ZUM ARBEITEN MIT DEM KREISSÄGEBLATT
LAME DE SCIE CIRCULAIRE ET PROCÉDÉ D'USINAGE À L'AIDE D'UNE LAME DE SCIE CIRCULAIRE

(30) Priority: 07.05.2015 JP 2015095149
(43) Date of publication of application: 09.11.2016
(73) Proprietor: Kanefusa Kabushiki Kaisha, Niwa-gun, Aichi 480-0192 (JP)
(72) Inventor: IINUMA, Tomoyuki, Niwa-gun, Aichi 480-0192 (JP); CHIBA, Hitoshi, Chiyoda-ku, Tokyo 101-0024 (JP)
(74) Representative: Prüfer & Partner mbB Patentanwälte · Rechtsanwälte

(56) References cited:
- EP-A1- 1 661 653
- EP-A1- 1 700 661
- None

## Description

### Technical Field

The present invention relates to a circular saw blade capable of efficiently suppressing scattering of chips rightward and leftward in the direction of the rotational axis of the circular saw blade at the time of cutting a work piece of a synthetic resin, aluminum alloy or the like using a circular saw blade having tips bonded to the periphery of a disk-shaped base metal, and a method of working with the circular saw blade.

### Background Art

Circular saw blades are popular as means for cutting off and cutting work pieces of various materials (hereinafter referred to as "cutting work"). The circular saw blades include (1) a circular saw blade having cutting teeth directly formed on the periphery of the disk-shaped base metal at predetermined intervals, and (2) a circular saw blade having gullets formed in the periphery of the disk-shaped base metal at predetermined intervals, and having tips brazed to the base metal in the individual gullets of the circular saw blade, rearward in the rotation direction thereof. The materials for the tips may be adequately selected from among materials such as a hard metal according to the materials of various work pieces to be cut, so that the circular saw blade (tipped saw blade) is the main stream in the art.

Japanese Unexamined Patent Publication No. 2002-347005 discloses a circular saw blade having tips bonded to a base metal and gullets. EP 1 661 653 A1 discloses a circular saw blade as per the preambles of appended claims 1 and 2.

### Summary of the Invention

### Problems to be Solved by the Invention

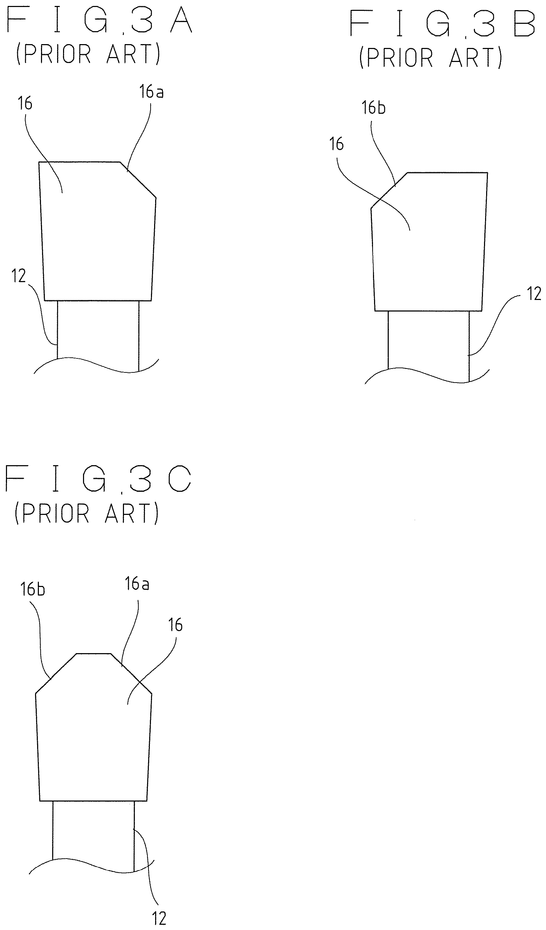

When a work piece to be cut with the circular saw blade provided with tips is a hollow member (round pipe, square pipe or the like) such as an extrusion profile or a pultrusion profile of a synthetic resin or an aluminum alloy as the material, the sound of cutting is disadvantageously very noisy. To reduce the noise at the time of cutting, therefore, a circular saw blade alternately provided with tips whose distal ends are beveled on one side and tips whose distal ends are beveled on both sides are used. For example, Figs. 3A to 3C illustrate tips 16 bonded to a disk-shaped base metal 12 of a circular saw blade as observed from the front with the rotation direction of the circular saw blade at the back, and Fig. 3A illustrates the state where a rightward-inclined right side beveling 16a is provided on the distal end of the tip 16. Fig. 3B illustrates the state where a leftward-inclined left side beveling 16b is provided on the distal end of the tip 16, and Fig. 3C illustrates the state where both side bevelings 16a, 16b are provided on the respective sides of the distal end of the tip 16. The central flat portion of the tip 16 beveled on both sides has a radius larger by 0.2 mm than the radius of the one-side beveled flat portion.

It has been confirmed that when a circular saw blade has one-side beveled tips and double-side beveled tips provided thereon alternately is used to cut a work piece of the aforementioned resin, aluminum alloy or the like as the material, the noise at the time of cutting is significantly lowered. This approach is very effective against the reduction of noise. However, it is pointed out that chips scatter rightward and leftward in the direction of the rotational axis of the circular saw blade at the time of cutting a work piece so that a large amount of chips scatters around, which is assumed to have originated from the right-side beveling, the left-side beveling and both-side beveling of the distal ends of the individual tips of the circular saw blade. When a work piece to be cut is a hollow pipe, especially, chips scattering rightward and leftward in the direction of the rotational axis of the circular saw blade during cutting inevitably enter the hollow portion of the work piece and remains therein. It is therefore necessary to proceed to the next work after the residual chips are dropped off the worked hollow work piece. However, it is desirable to make the amount of the residual chips less from the start in order to reduce such a troublesome drop-off work.

Further, even if chips are dropped off, static electricity may prevent fine chips from completely falling off so that the chips remain in the hollow portion of the work piece. Such residual chips inside the hollow work piece may cause various unfavorable behaviors when a paint is applied to the cut work piece after cutting, or precision postwork is performed. In the point of production, therefore, there are strong demands of suppressing rightward and leftward scattering of chips at the time of cutting a work piece with a circular saw blade as much as possible.

### Means for Solving the Problem

This object is achieved by the circular saw blade having the features of claims 1 and 2, respectively. The present invention is further developed as defined in dependent claim 3.

According to the invention set forth in claim 1, chips which are produced at the time of cutting with the circular saw blade are permitted to intensively fall off directly below in the rotation direction of the circular saw blade, thus effectively suppressing the inconvenience of the chips scattering rightward and leftward in the direction of the rotational axis of the circular saw blade.

According to the invention set forth in claim 2, chips which are produced at the time of cutting with the circular saw blade are permitted to intensively fall off directly below in the rotation direction of the circular saw blade, thus effectively suppressing the inconvenience of the chips scattering rightward and leftward in the direction of the rotational axis of the circular saw blade. In addition, the cutting sound that is produced at the time of cutting a work piece is reduced.

According to the invention set forth in claim 3, a hollow face is formed on the rake face of the tip in addition to the invention of claim 1 or claim 2, thereby more effectively suppressing scattering of chips rightward and leftward of the circular saw blade.

According to the invention set forth in claim 4, it is possible to significantly reduce possible scattering of chips inside a hollow member including an extrusion profile or the like at the time of cutting the hollow member.

### Effects of the Invention

The present invention demonstrates effects of reducing the cutting noise as well as efficiently suppressing scattering of cut chips (chips) rightward and leftward in the direction of the rotational axis of the circular saw blade at the time of cutting work pieces of various materials with the circular saw blade.

### Brief Description of Drawings

Fig. 1A is a partly enlarged plan view of tooth portions of a circular saw blade according to a first embodiment of the invention, and Fig. 1B is an enlarged view of a portion encircled in Fig. 1A.
Fig. 2 is a partly enlarged plan view of tooth portions of a circular saw blade according to a second embodiment of the invention.
Figs. 3A to 3C each is a front view of a "rake face" of a tip which has been conventionally used to reduce the noise at the time of cutting a work piece, Figs. 3A to 3C illustrating various kinds of beveling applied to the distal ends of tips.

### Mode for Carrying Out the Invention

Next, a circular saw blade according to the invention and a working method of cutting a work piece with the circular saw blade are described by way of preferred embodiments with reference to the accompanying drawings. The circular saw blade into which the invention is embodied is what is called a tipped saw blade described above that has tips bonded to the base metal in the individual gullets.

### First Embodiment

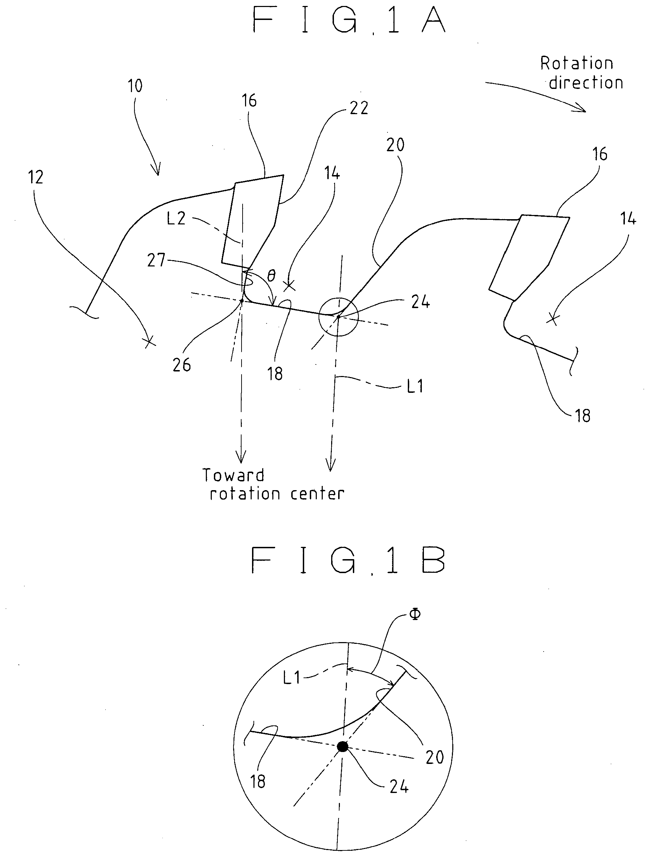

Figs. 1A and 1B illustrate a first embodiment of a circular saw blade 10 according to the invention, which is the what is called tipped saw blade mentioned above. That is, gullets 14 are recessed in the periphery of a disk-shaped base metal 12 of the circular saw blade 10 at required intervals, and tips 16 of a hard metal or the like as its material are brazed to the individual gullets 14. The position at which the tip 16 is bonded to the base metal 12 in the gullet 14 is a radially extending portion of the gullet 14 in the retreating direction with respect to the rotation direction of the circular saw blade 10, i.e., rearward in the rotation direction.

In the circular saw blade 10 according to the invention, each of a gullet bottom 18 and a back portion 20 (which will be described later) in the gullet 14 is configured to extend linearly. In other words, with regard to the gullet 14 recessed in the base metal 12, a bottom closest to the rotation center of the circular saw blade, which is referred to as the gullet bottom 18, extends linearly in the tangential direction by a required distance. This linear distance D in the gullet bottom 18 (the distance from a front portion 24 to a rear portion 26 which will be described later) is preferably between 3.5 mm and 7.5 mm. With regard to the gullet 14, a portion facing a rake face 22 of the tip 16 bonded to the base metal 12, which is referred to as the back portion 20, also extends linearly by a predetermined distance. The upper end of the back portion 20 is contiguous to the bonded portion of the tip 16 bonded to a next gullet 14 provided in the rotation direction of the circular saw blade. The rake face 22 is the face that serves to rake chips in front of the rotation direction of the tip 16 of the circular saw blade 10.

A second back portion 27 of the gullet 14 located below the rake face 22 of the tip 16 and facing the first back portion 20 is linearly shaped. The rear portion 26 is an intersection between the extension line of the gullet bottom 18 and the extension line of the second back portion 27. Further, according to the first embodiment, it turns out from the results of various experiments that the scattering direction of chips which are produced at the time of cutting a work piece can be controlled to lie within a favorable scattering range by specifying the slant angle formed by the back portion 20 extending linearly with respect to the straight line passing the rotation center of the circular saw blade 10 to a certain range. That is, a slant angle Φ formed by the back portion 20 with respect to a straight line L1, which passes the center of the rotational axis (not shown) of the circular saw blade 10 and the front portion 24 in the rotation direction (to be described later) at the gullet bottom 18, is selected from a range of -5° to 35°. In the embodiment, the slant angle Φ formed by the back portion 20 with respect to the straight line L1 is 34°. In addition, a slant angle θ formed by the linear gullet bottom 18 of the gullet 14 with respect to a straight line L2 which passes the rotation center of the circular saw blade and the rear portion 26 in the rotation direction at the gullet bottom 18 is between 45° and 100°.

The "front portion 24" mentioned above is described referring to Fig. 1B. Fig. 1B is an enlarged view of an encircled portion of the gullet 14 in Fig. 1A, and the intersection of a rightward extension line of the gullet bottom 18, which is a straight line, and a downward extension line of the back portion 20, which is also a straight line, is referred to as "front portion 24." Therefore, the straight line L1 is defined to be a straight line passing the rotation center of the circular saw blade 10 and the front portion 24 which is the intersection of the individual extension lines of the gullet bottom 18 and the back portion 20.

In the circular saw blade 10 of the first embodiment, as apparent from the above, the gullet bottom 18 and the back portion 20 at the gullet 14 were extended linearly by predetermined distances, the slant angle Φ formed by the back portion 20 with respect to the straight line L1 passing the rotation center of the circular saw blade and the front portion 24 in the rotation direction at the gullet bottom 18 was set in the range of -5° to 35°, the slant angle θ formed by the linear gullet bottom 18 of the gullet 14 with respect to the straight line L2 passing the rotation center of the circular saw blade and the rear portion 26 in the rotation direction at the gullet bottom 18 was set to 45° to 100°, and the length D of the gullet bottom 18 was set to 3.5 mm to 7.5 mm, thereby reducing the scattering amount of chips remaining inside a hollow work piece of, for example, an aluminum alloy as the material, by 92% as compared with the conventional circular saw blade illustrated in Figs. 3A to 3C. In other words, cutting the work piece with the circular saw blade 10 causes the chips of the work piece to drop intensively directly below the rotation direction of the circular saw blade 10, and thus efficiently suppresses the phenomenon that the chips scatter rightward and leftward in the direction of the rotational axis of the circular saw blade.

What is called a hollow face is formed on the rake face 22 of the tip 16 illustrated in Fig. 1A in the retreating direction with respect to the rotation direction of the circular saw blade 10. As described in the paragraph [0003] in the Patent Document 1, this hollow face is a tooth mark of the tip 16 formed into substantially arcuate rake face by forming right and left symmetrical dents in the rake face 22 as viewing the tip 16 in a direction parallel to the rake face 22 from the escaping side of the outer periphery. Further forming the hollow face on the rake face 22 of the tip 16 of the circular saw blade 10 according to the first embodiment can reduce the scattering amount of chips at the time of cutting a work piece of, for example, an aluminum alloy as the material, with high efficiency of 99%.

### Experiments

Square pipes of an aluminum alloy with a thickness of 50 mm × 1.5 mm were cut at a rotational speed of 3,600 rpm and a feeding speed of 6m/min using a tipped saw blade with an outside diameter of 510 mm, a gullet width of the tips of 3.5 mm, and the number of gullets of 100. After the cutting, the total weight of the chips remaining in each square pipe was measured, and the measurement results were compared.

**Table 1**

| | Blade Type | Shape of Gullet | Total weight of chips (mg) | Rate of reduction of scattering chips to Conventional Art 1 |
|---|---|---|---|---|
| Conventional Art 1 | Combination of both beveling and right and left side beveling | Gullet bottom: R shape | 512 | 0% |
| | | Forward slant angle: 15° | | |
| Invention 1 | Flat tooth | Gullet bottom: Straight | 39 | 92% |
| | | Forward slant angle: 10° | | |
| Invention 2 | Hollow face type | Gullet bottom: Straight | 2 | 99% |
| | | Forward slant angle: 10° | | |

### Consideration

When the gullet bottom of the gullet is set straight and the forward slant angle Φ in the rotation direction is set in the range of -5° to 35°, chips remain in the gullet due to the Karman's vortex (to be described later), so that the effect of preventing scattering of chips becomes high. It was confirmed that the straight length at the gullet bottom (length from the front portion to the rear portion) was 3.5 mm to 7.5 mm.

### Second Embodiment

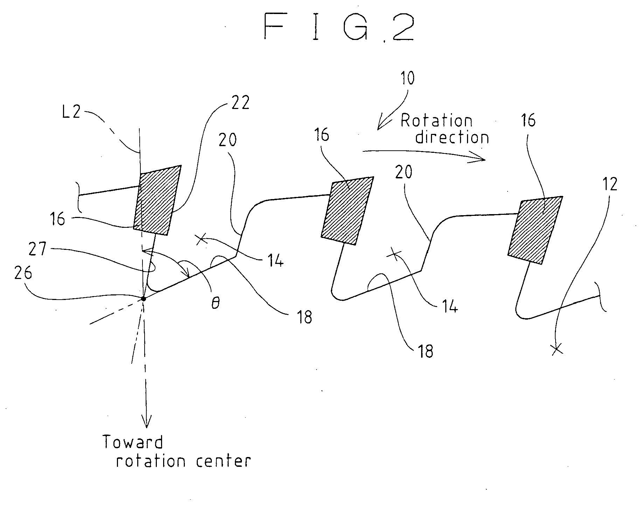

Fig. 2 illustrates a second embodiment of the circular saw blade 10 according to the invention whose fundamental configuration is the same as the above-described configuration of the first embodiment. The dimensions of the circular saw blade 10 according to the second embodiment are set in such a way that the rake face 22 of the tip 16 bonded to the base metal 12 at the gullet 14, and the back portions 20 each facing the rake face 22 with the gullet 14 in between are substantially in parallel to one another. In this case, the separation distance between the rake face 22 and the back portion 20 of the tip 16 which are substantially in parallel to each other is preferably between 3.5 mm and 7.5 mm; and in this embodiment, the distance was 7.2 mm.

Further, the circular saw blade 10 according to the second embodiment can control the scattering direction of chips which are produced at the time of cutting a work piece to lie within a favorable scattering range by specifying the slant angle formed by the gullet bottom 18 at the gullet 14 and the straight line passing the rotation center of the circular saw blade 10 to a certain range. That is, the slant angle θ formed by the gullet bottom 18 of the gullet 14 with respect to the straight line L2, which passes the center of the rotational axis (not shown) of the circular saw blade 10 and the rear portion 26 in the rotation direction (counter direction to the rotation direction) at the gullet bottom 18, is selected from a range of 45° to 60°. In this embodiment, the slant angle θ is 52.5°.

In the circular saw blade 10 of the second embodiment, as apparent from the above, the rake face 22 of the tip 16 at the gullet 14 and the back portion 20 facing the rake face 22 are set substantially in parallel to each other, and the slant angle θ formed by the gullet bottom 18 of the gullet 14 with respect to the straight line L2 passing the rotation center of the circular saw blade and the rear portion 26 in the rotation direction at the gullet bottom 18 is set to 45° to 60°, making it possible to reduce the scattering amount of chips remaining inside a work piece of an aluminum alloy by 90% as compared with the conventional circular saw blade illustrated in Figs. 3A to 3C. As compared with the base metal without tips, the idling noise in the first embodiment is 94 dB, whereas the idling noise in the second embodiment is reduced to 92 dB.

Further, forming the hollow face on the rake face 22 of the tip 16 as done in the illustrated circular saw blade 10 of the first embodiment can reduce the scattering amount of chips of a work piece of the aforementioned aluminum alloy to 97%.

It should be noted that the rake angle of the tip 16 in Fig. 2 is 5° to 25°. For the circular saw blade 10 of this embodiment, the rake angle is 10°.

### Experiments

Square pipes of an aluminum alloy of 50 mm × 1.5 mm thickness were cut at a rotational speed of 3,600 rpm and a feeding speed of 6m/min using a tipped saw blade with an outside diameter of 510 mm, a gullet width of the tips of 3.5 mm, and the number of gullets of 100. After the cutting, the total weight of the chips remaining in each square pipe was measured, and the measurement results were compared.

**Table 2**

| | Blade Type | Shape of Gullet | Total weight of chips (mg) | Rate of reduction of scattering chips to Conventional Art 1 |
|---|---|---|---|---|
| Conventional Art 1 | Combination of both beveling and right and left side beveling | Gullet bottom: R shape | 512 | 0% |
| | | Forward slant angle: 15° | | |
| Invention 3 | Flat tooth | Gullet bottom: Straight | 52 | 90% |
| | | Forward slant angle: 15° | | |
| Invention 4 | Hollow face type | Gullet bottom: Straight | 12 | 97% |
| | | Forward slant angle: 15° | | |

### Consideration

When the gullet bottom of the gullet is set straight and the forward slant angle Φ in the rotation direction is set in the range of -5° to 35°, chips remain in the gullet due to the Karman's vortex (to be described later), so that the effect of preventing scattering of chips becomes high. It was confirmed that the favorable straight length at the gullet bottom (length from the front portion to the rear portion) was 3.5 mm to 7.5 mm.

It seems that the use of the circular saw blades 10 of the first embodiment and the second embodiment can reduce the rate of scattering chips rightward and leftward in the direction of the rotational axis of the circular saw blade 10 to effectively control the scattering direction due to the Karman's vortex. The " Karman's vortex" is academically explained as the behavior of a fluid such that as a columnar object moves in a fluid at an appropriate speed, reversed vortices are produced from the right and left sides of the object, and are aligned in two lines regularly. In the case of the invention, although a work piece to be cut with the circular saw blade 10 is of course solid, the aggregate of a large amount of chips produced by the cutting work may be considered as a fluid. Therefore, it appears that the cut chips stay in the gullets 14 of the circular saw blade 10 as a fluid, but the shapes of the gullets 14 of the circular saw blade 10 specified in the first embodiment and the second embodiment produce the Karman's vortices in the gullets 14 with the rotation of the circular saw blade 10, thereby suppressing the rightward and leftward scattering of chips in the direction of the rotational axis of the circular saw blade 10. It was confirmed that the noise at the time of cutting a work piece was also suppressed low.

As apparent from the above, the circular saw blade according to the invention efficiently suppresses the chips produced at the time of cutting a work piece from scattering rightward and leftward of the circular saw blade, so that when an object to be cut is a hollow work piece, for example, it is possible to significantly reduce undesirable scattering of chips inside the hollow portion of the work piece and residual of the chip therein.

### Description of Reference Numerals

- 12: base metal
- 14: gullet
- 16: tips
- 18: gullet bottom
- 20: back portion
- 22: rake face
- 24: front portion
- 26: rear portion
- L1, L2: straight lines

## Claims

1. A circular saw blade having tips (16) bonded to a base metal (12), rearward in a rotation direction of gullets (14), recessed in a periphery of the base metal (12) at predetermined intervals, wherein
a gullet bottom (18) of the gullet (14) is linearly shaped, and a back portion (20) of
the gullet (14) facing a rake face (22) of the tip (16) is linearly shaped,
the front portion (24) of the gullet bottom (18) is an intersection between an extension line of the gullet bottom (18) and an extension line of the back portion (20), and the rear portion (26) of the gullet bottom (18) is an intersection between the extension line of the gullet bottom (18) and an extension line of a radially extending portion (27) of the gullet located below the rake face (22),
a slant angle (Φ) formed by the back portion (20) with respect to a first straight line (L1) passing a rotation center of the circular saw blade and the front portion (24) of the gullet bottom (18) in the rotation direction is between -5° and 35°, **characterised in that** a slant angle (θ) formed by the linear gullet bottom (18) with respect to a second straight line (L2) passing the rotation center of the circular saw blade and the rear portion (26) of the gullet bottom (18) in the rotation direction is between 45° and 100° and a straight length from the front portion (24) of the gullet bottom (18) to the rear portion (26) of the gullet bottom (18) is between 3.5 mm and 7.5 mm.

2. A circular saw blade having tips (16) bonded to a base metal, rearward in a rotation direction of gullets (14), recessed in a periphery of the base metal (12) at predetermined intervals, wherein
a gullet bottom (18) of the gullet (14) is linearly shaped, and a back portion (20) of the gullet (14) facing a rake face (22) of the tip (16) is linearly shaped,
the front portion (24) of the gullet bottom (18) is an intersection between an extension line of the gullet bottom (18) and an extension line of the back portion (20), and the rear portion (26) of the gullet bottom (18) is an intersection between the extension line of the gullet bottom (18) and an extension line of a radially extending portion (27) of the gullet located below the rake face (22),
a slant angle (Φ) formed by the back portion (20) with respect to a first straight line (L1) passing a rotation center of the circular saw blade and the front portion (24) of the gullet bottom (18) in the rotation direction is between -5° and 35°, **characterised in that**
the rake face (22) of the tip (16) in the gullet (14) and the back portion (20) facing the rake face (22) are set substantially in parallel to each other, and
a slant angle (θ) formed by the linear gullet bottom (18) with respect to a second straight line (L2) passing the rotation center of the circular saw blade and the rear portion (26) of the gullet bottom (18) in the rotation direction is between 45° and 60°.

3. The circular saw blade according to claim 1 or 2, wherein the rake face (22) of the tip (16) has a hollow face dented in a retreating direction with respect to the rotation direction of the circular saw blade.

4. A method of working with the circular saw blade according to any one of claims 1 to 3, wherein the circular saw blade cuts an extrusion profile or a pultrusion profile of an aluminum alloy as the material.

## Patentansprüche

1. Ein Kreissägeblatt mit Zahnspitzen (16), die an einem Grundmetall (12) in Bezug auf solche gegenüber einem äußeren Rand des Grundmetalls (12) vertiefte Zahnausnehmungen (14) in Drehrichtung rückwärtig angebondet sind, wobei
ein Zahnausnehmungsgrund (18) der Zahnausnehmung (14) linear geformt ist, und ein Rückenabschnitt (20) der Zahnausnehmung (14), welcher einer Spanfläche (22) der Zahnspitze (16) zugewandt ist, linear geformt ist,
ein vorderer Abschnitt (24) des Zahnausnehmungsgrunds (18) durch einen Schnittpunkt zwischen einer verlängerten Geraden des Zahngrunds (18) und einer verlängerten Geraden des Rückenabschnitts (20) festgelegt ist, und ein hinterer Abschnitt (26) des Zahnausnehmungsgrunds (18) durch einen Schnittpunkt zwischen einer verlängerten Geraden des Zahngrunds (18) und einer verlängerten Geraden eines sich radial erstreckenden Abschnitts (27) der Zahnausnehmung unterhalb der Spanfläche (22) festgelegt ist,
ein durch den Rückenabschnitt (20) in Bezug auf eine erste gerade Linie (L1), die sich durch einen Drehmittelpunkt des Kreissägeblatts und den vorderen Abschnitt (24) des Zahnausnehmungsgrunds erstreckt, ausgebildeter Neigungswinkel (Φ) in Drehrichtung zwischen -5° und 35° beträgt,
**dadurch gekennzeichnet, dass**
ein durch den linearen Zahnausnehmungsgrund (18) in Bezug auf eine zweite gerade Linie (L2), die sich durch den Drehmittelpunkt des Kreissägeblatts und den hinteren Abschnitt (26) erstreckt, ausgebildeter Neigungswinkel (θ) in Drehrichtung zwischen 45° und 100° beträgt, und
eine gerade Länge von dem vorderen Abschnitt (24) des Zahnausnehmungsgrunds (18) bis zu dem hinteren Abschnitt (26) des Zahnausnehmungsgrunds (18) zwischen 3,5 mm und 7,5 mm beträgt.

2. Ein Kreissägeblatt mit Zahnspitzen (16), die an einem Grundmetall (12) in Bezug auf solche gegenüber einem äußeren Rand des Grundmetalls (12) vertiefte Zahnausnehmungen (14) in Drehrichtung rückwärtig angebondet sind, wobei
ein Zahnausnehmungsgrund (18) der Zahnausnehmung (14) linear geformt ist, und ein Rückenabschnitt (20) der Zahnausnehmung (14), welcher einer Spanfläche (22) der Zahnspitze (16) zugewandt ist, linear geformt ist,
ein vorderer Abschnitt (24) des Zahnausnehmungsgrunds (18) durch einen Schnittpunkt zwischen einer verlängerten Geraden des Zahngrunds (18) und einer verlängerten Geraden des Rückenabschnitts (20) festgelegt ist, und ein hinterer Abschnitt (26) des Zahnausnehmungsgrunds (18) durch einen Schnittpunkt zwischen einer verlängerten Geraden des Zahngrunds (18) und einer verlängerten Geraden eines sich radial erstreckenden Abschnitts (27) der Zahnausnehmung unterhalb der Spanfläche (22) festgelegt ist,
ein durch den Rückenabschnitt (20) in Bezug auf eine erste gerade Linie (L1), die sich durch einen Drehmittelpunkt des Kreissägeblatts und den vorderen Abschnitt (24) des Zahnausnehmungsgrunds erstreckt, ausgebildeter Neigungswinkel (Φ) in Drehrichtung zwischen -5° und 35° beträgt,
**dadurch gekennzeichnet, dass**
die Spanfläche (22) der Zahnspitze (16) in der Zahnausnehmung (14) und der Rückenabschnitt (20), welcher der Spanfläche (22) zugewandt ist, im Wesentlichen parallel zueinander sind, und
ein durch den linearen Zahnausnehmungsgrund (18) in Bezug auf eine zweite gerade Linie (L2), die sich durch den Drehmittelpunkt des Kreissägeblatts und den hinteren Abschnitt (26) erstreckt, ausgebildeter Neigungswinkel (θ) in Drehrichtung zwischen 45° und 60° beträgt.

3. Das Kreissägeblatt gemäß Anspruch 1 oder 2, wobei die Spanfläche (22) der Zahnspitze (16) eine Hohlfläche besitzt, die in rückwärtiger Richtung in Bezug auf die Drehrichtung des Kreissägeblatts eingedrückt ist.

4. Ein Verfahren zum Arbeiten mit der Kreissäge gemäß einem der Ansprüche 1 bis 3, wobei das Kreissägeblatt ein Extrusionsprofil oder ein Pultrusionsprofil einer Aluminiumlegierung als Material schneidet.

## Revendications

1. Lame de scie circulaire comportant des inserts (16) soudés sur une base métallique (12), vers l'arrière suivant le sens de rotation de gorges (14), creusées sur une périphérie de la base métallique (12) à intervalles prédéterminés, dans laquelle
un fond de gorge (18) de la gorge (14) est formé linéairement et une partie arrière (20) de la gorge (14) faisant face à une face inclinée (22) de l'insert (16) est formée linéairement,
la partie avant (24) du fond de gorge (18) est une intersection entre une ligne d'extension du fond de gorge (18) et une ligne d'extension de la partie arrière (20), et la partie arrière (26) du fond de gorge (18) est une intersection entre une ligne d'extension du fond de gorge (18) et une ligne d'extension d'une partie s'étendant radialement (27) de la gorge située au-dessous de la face inclinée (22),
un angle d'inclinaison (Φ) formé par la partie arrière (20) par rapport à une première ligne droite (L1) passant par un centre de rotation de la lame de scie circulaire et la partie avant (24) du fond de gorge (18) suivant le sens de rotation est compris entre -5° et 35°, **caractérisée en ce que**
un angle d'inclinaison (θ) formé par le fond de gorge linéaire (18) par rapport à une seconde ligne droite (L2) passant par le centre de rotation de la lame de scie circulaire et la partie arrière (26) du fond de gorge (18) suivant le sens de rotation est compris entre 45° et 100°, et une longueur droite à partir de la partie avant (24) du fond de gorge (18) jusqu'à la partie arrière (26) du fond de gorge (18) est comprise entre 3,5 mm et 7,5 mm.

2. Lame de scie circulaire comportant des inserts (16) soudés sur une base métallique, vers l'arrière suivant le sens de rotation de gorges (14), creusées sur une périphérie de la base métallique (12) à intervalles prédéterminés, dans laquelle
un fond de gorge (18) de la gorge (14) est formé linéairement et une partie arrière (20) de la gorge (14) faisant face à une face inclinée (22) de l'insert (16) est formée linéairement,
la partie avant (24) du fond de gorge (18) est une intersection entre une ligne d'extension du fond de gorge (18) et une ligne d'extension de la partie arrière (20), et la partie arrière (26) du fond de gorge (18) est une intersection entre une ligne d'extension du fond de gorge (18) et une ligne d'extension d'une partie s'étendant radialement (27) de la gorge située au-dessous de la face inclinée (22),
un angle d'inclinaison (Φ) formé par la partie arrière (20) par rapport à une première ligne droite (L1) passant par un centre de rotation de la lame de scie circulaire et la partie avant (24) du fond de gorge (18) suivant le sens de rotation est compris entre -5° et 35°, **caractérisée en ce que**
la face inclinée (22) de l'insert (16) dans la gorge (14) et la partie arrière (20) faisant face à la face inclinée (22) sont agencées sensiblement parallèlement l'une à l'autre, et
un angle d'inclinaison (θ) formé par le fond de gorge linéaire (18) par rapport à une seconde ligne droite (L2) passant par le centre de rotation de la lame de scie circulaire et la partie arrière (26) du fond de gorge (18) suivant le sens de rotation est compris entre 45° et 60°.

3. Lame de scie circulaire selon la revendication 1 ou 2, dans laquelle la face inclinée (22) de l'insert (16) présente une face creuse bosselée dans un sens en retrait par rapport au sens de rotation de la lame de scie circulaire.

4. Procédé d'usinage avec la lame de scie circulaire selon l'une quelconque des revendications 1 à 3, dans lequel la lame de scie circulaire coupe un profilé d'extrusion ou un profilé de pultrusion d'un alliage d'aluminium en tant que matériau.
